# EUROPEAN PATENT APPLICATION

(11) **EP 4 563 980 A1**
(43) Date of publication of application: **04.06.2025**
(21) Application number: 22956610.4
(22) Date of filing: 30.11.2022
(51) Int. Cl.: G01N 21/64

(54) **IMAGE ACQUISITION DEVICE AND ACQUISITION METHOD FOR DETECTING TARGET MATERIAL SIGNAL**

(30) Priority: 25.08.2022 KR 20220106774
(71) Applicant: Ezdiatech Inc., Chungcheongnam-do 31116 (KR)
(72) Inventor: JUNG, Yong-Gyun, Seoul 05792 (KR); MOON, Daekyung, Gunpo-si Gyeonggi-do 15869 (KR)
(74) Representative: Prüfer & Partner mbB Patentanwälte · Rechtsanwälte
(86) International application number: PCT/KR2022/019249
(87) International publication number: WO 2024/043404

(57) **Abstract**

The present invention relates to an image acquisition device and acquisition method for detecting a target material signal, which have improved sensitivity and uniformity compared to those of a conventional fluorescence microscope used for acquiring fluorescence images. The present invention provides the image acquisition device for detecting a target material signal, comprising: (a) a camera for detecting a fluorescence signal; (b) light sources that are disposed outside the camera at regular intervals in a circular shape; (c) a shielding guide that is positioned above the light sources and which transmit only vertical direction light of light emitted from the light sources; and (d) a prism that refracts the light passing through the shielding guide toward a sample.

## Description

### [Technical Field]

The present invention relates to an image acquisition device and acquisition method for detecting a target material signal, and more particularly, to an image acquisition device and acquisition method for detecting a target material signal, which have improved sensitivity and uniformity compared to those of a conventional fluorescence microscope used for acquiring fluorescence images.

### [Background Art]

Many methods to detect pathogenic substances have been used since the past. The existing method collects a specimen from patients or a source of infection, and then analyzes the specimen optically or chemically to determine a type of pathogenic substances. However, the existing method not only requires a large amount of specimens, but also often determines whether detection is successful or not depending on the skill of an examiner, which has limitations in accurately diagnosing pathogenic substances.

In particular, when symptoms occur due to a new pathogen or chemical substance, it is necessary to secure a large amount of specimens to analyze the symptoms, which may be a great burden to the patient.

To improve this problem, a method of amplifying pathogen using PCR is being used. The PCR amplifies DNA of pathogens, and can secure the pathogens even from a small amount of specimens, but has the disadvantage of taking a long time to amplify the DNA, so the PCR may only be limitedly used for the initial diagnosis of the pathogens.

Recently, as mass infections take place due to biochemical terrorism or pathogens, a technology that can identify specimens in a short period of time is required. To this end, an immunological analysis method of binding an antibody to which a fluorescent substance is attached to pathogenic substances to perform a test is being widely introduced. This immunological analysis method has the advantage of being able to quickly confirm results compared to the existing PCR-based analysis method, and perform analysis with only a small amount of specimens.

In the case of this immunological analysis method, since the presence or absence of pathogenic substances is determined by using the light emission of fluorescent substances, a fluorescence microscope is mostly used. In the case of the commonly used fluorescence microscope, since an optical path that supplies excitation light and an optical path of fluorescence generated from a sample are identical, a device is required to separate and observe these optical paths. In order to separate these optical paths, a dichroic mirror is generally used in the existing fluorescence microscopes.

However, the dichroic mirror has characteristic of reflecting some of the fluorescence generated from a specimen, which has the disadvantage of not only reducing the resolution, but also causing damage to the specimen when strong excitation light is used to secure the intensity of fluorescence.

Therefore, there is a need to develop a new fluorescence microscope capable of acquiring high-resolution fluorescence images while preventing damage to a specimen.

### [Disclosure]

### [Technical Problem]

In order to solve the above-described problem, the present invention aims to provide an image acquisition device and acquisition method for detecting a target material signal, which have improved sensitivity and uniformity compared to those of a conventional fluorescence microscope used for acquiring fluorescence images.

### [Technical Solution]

In one aspect, an image acquisition device for detecting a target material signal includes: (a) a camera for detecting a fluorescence signal; (b) light sources that are disposed outside the camera at regular intervals in a circular shape; (c) a shielding guide that is positioned above the light source and transmits only vertical direction light of light emitted from the light source; and (d) a prism that refracts the light passing through the shielding guide toward a sample.

In one embodiment, the shielding guide may include: a central guide part that is formed in a center of the shielding guide and through which the fluorescence signal generated from the sample passes; and an excitation light guide part that is installed on the outside of the central guide part at regular intervals and through which the excitation light generated from the light source passes.

In one embodiment, a light-absorbing coating layer may be formed inside the central guide part or the excitation light guide part.

In one embodiment, when an internal diameter is R and a length from a point of contact with the excitation light to a top end is L, the excitation light guide part may have R/L of 0.05 to 0.5.

In one embodiment, the excitation light guide part may have an internal diameter R of 2 to 5 mm and a length L of 10 to 50 mm.

In one embodiment, the shielding guide may include 2 to 30 excitation light guide parts, and the light sources may be independently installed in each of the excitation light guide parts.

In one embodiment, an excitation light lens may be formed above the light source to focus the excitation light generated from the light source.

In one embodiment, the image acquisition device may acquire a fluorescence image with a magnification of 0.5 to 2 times.

In one embodiment, the prism may be installed above the shielding guide to refract the excitation light passing through the shielding guide toward the sample.

In one embodiment, the light source may be a light emitting diode (LED) that emits excitation light with a wavelength of 400 to 700 nm.

The image acquisition device may have a uniformity of 70% or more, as expressed by Equation 1 below.Uniformity = (min for fluorescence signal of each pixel area divided from the entire image analysis area/max for fluorescence signal of each pixel area divided from the entire image analysis area) × 100(%)

The sensitivity of the image acquisition device to fluorescence may have 5 times higher than that of a conventional low-magnification fluorescence microscope.

In another aspect, an image acquisition device for detecting a target material signal includes: (i) a camera for detecting a fluorescence signal and an optical signal; (ii) a sample unit that is installed at a certain interval from the camera; (iii) a fluorescence unit that supplies excitation light from the camera toward the sample unit; and (iv) an optical section that is installed at a certain distance from the sample unit in an opposite direction to the camera and supplies visible light toward the camera, wherein the fluorescence unit includes: (1) light sources that are disposed outside the camera at regular intervals in a circular shape; (2) a shielding guide that is positioned above the light source and transmits only vertical direction light of light emitted from the light source; and (3) a prism that refracts the light passing through the shielding guide toward a sample.

In one embodiment, the sample may include magnetic particles.

In one embodiment, the magnetic particles may be formed in a micro-rod shape or a spherical shape.

In still another aspect, an image analysis method using an image acquisition device for detecting a target material signal, wherein the image acquisition device includes: (i) a camera for detecting a fluorescence signal and an optical signal, (ii) a sample unit that is installed at a certain interval from the camera, (iii) a fluorescence unit that supplies excitation light from the camera toward the sample unit, and (iv) an optical section that is installed at a certain distance from the sample unit in an opposite direction to the camera and supplies visible light toward the camera, and the image analysis method includes the steps of: ① injecting magnetic particles binding to a target material into each well of a multi-well plate; ② fixing the multi-well plate to a sample unit; ③ applying power to an upper optical unit to acquire an optical image; and ④ applying power to a lower fluorescence unit to acquire a fluorescence image.

### [Advantageous Effects]

According to the present invention, since an image acquisition device for detecting a target material signal can improve the uniformity and sensitivity of the fluorescence signal by blocking the diffusion of excitation light when observing a fluorescence signal, it is possible to acquire fluorescence images with higher resolution than the existing fluorescence microscope.

In addition, according to the present invention, since the image acquisition device for detecting a target material signal can have high uniformity and sensitivity, it is possible to acquire low-magnification fluorescence images and simultaneously analyze large-area samples.

### [BRIEF DESCRIPTION OF THE DRAWINGS]

FIG. 1 is a diagram illustrating a structure of an image acquisition device for detecting a target material signal according to an embodiment of the present invention.
FIG. 2 is a diagram illustrating an internal structure of the image acquisition device for detecting a target material signal according to an embodiment of the present invention.
FIG. 3 is a schematic diagram illustrating a generation of optical images and a generation of fluorescence images in the image acquisition device for detecting a target material signal according to an embodiment of the present invention.
FIG. 4 is a diagram illustrating a structure of a shielding guide and a lens according to an embodiment of the present invention.
FIG. 5 is a schematic diagram illustrating the alignment of excitation light in an excitation light guide according to an embodiment of the present invention.
FIG. 6 is a diagram illustrating a degree to which the excitation light is focused according to a length of the excitation light guide according to an embodiment of the present invention.
FIG. 7 is a diagram illustrating a shape of a prism according to an embodiment of the present invention.
FIGS. 8 to 12 are diagrams illustrating uniformity experiment results according to an embodiment of the present invention.
FIG. 13 is a diagram illustrating resolution experiment results according to an embodiment of the present invention.
FIG. 14 is a diagram illustrating resolution and sensitivity experiment results according to an embodiment of the present invention.
FIG. 15 is a graph showing the sensitivity experiment results according to an embodiment of the present invention.
FIG. 16 is a photograph showing the sensitivity experiment results according to an embodiment of the present invention.

### [Best Mode]

Hereinafter, preferred embodiments of the present invention will be described in detail. When it is determined that a detailed description for any known art related to the present invention may obscure the gist of the present invention, the detailed description will be omitted. It should be understood that the singular expression includes the plural expression unless the context clearly indicates otherwise, and it will be further understood that the terms "comprise" or "have" used in this specification, specify the presence of stated features, steps, operations, components, parts, or a combination thereof, but do not preclude the presence or addition of one or more other features, numerals, steps, operations, components, parts, or a combination thereof. In addition, in performing the method or the manufacturing method, each of the processes constituting the method may occur differently from the specified order unless a specific order is explicitly described in context. That is, the respective steps may be performed in the same sequence as the described sequence, be performed at substantially the same time, or be performed in an opposite sequence to the described sequence.

The technology disclosed in the present specification is not limited to implementation examples, but may be implemented in other forms. However, exemplary embodiments introduced herein are provided to make disclosed contents thorough and complete and sufficiently transfer the spirit of the present invention to those skilled in the art. In the drawing, in order to clearly express the components of each device, the size of the components, such as width or thickness, is shown somewhat enlarged. When describing the drawings as a whole, it has been described from the observer's point of view, and when one element is referred to as being located on top of another element, this includes all the meanings that one element may be located directly on another element, or additional elements may be interposed between them. In addition, those skilled in the art will be able to implement the spirit of the present invention in various other forms without departing from the technical spirit of the present invention. In addition, like reference numerals in a plurality of drawings denote elements that are substantially the same as each other.

In this specification, the term 'and/or' includes a combination of a plurality of recited items or any one of a plurality of recited items. In the present specification, 'A or B' may include 'A', 'B', or 'both of A and B'.

The present invention relates to an image acquisition device for detecting a target material signal, including: (a) a camera for detecting a fluorescence signal; (b) light sources that are disposed outside the camera at regular intervals in a circular shape; (c) a shielding guide that is positioned above the light sources and transmits only vertical direction light of light emitted from the light source; and (d) a prism that refracts light passing through the shielding guide toward a specimen.

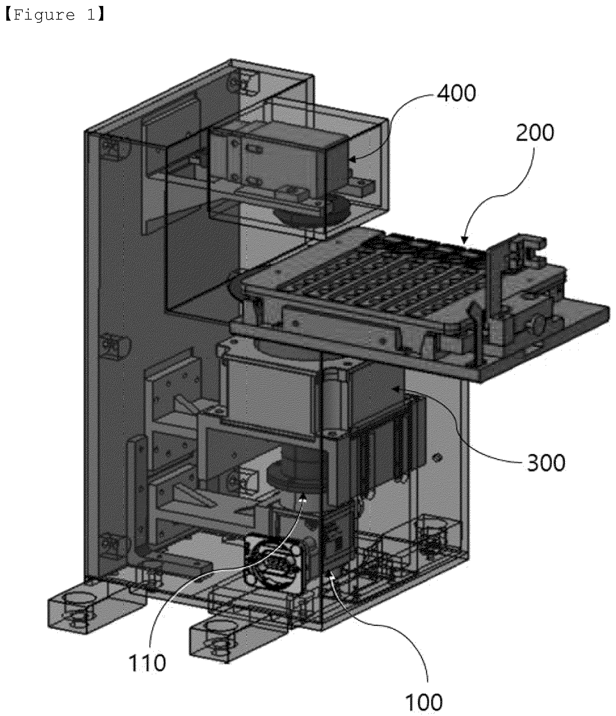

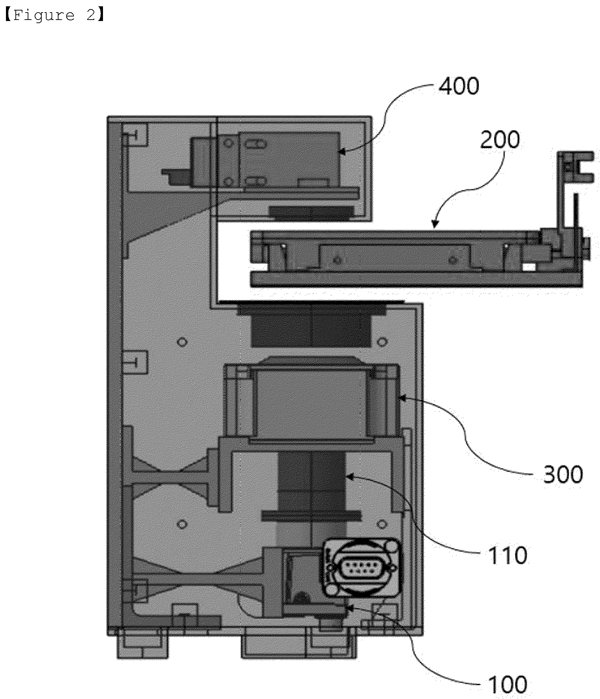

Hereinafter, the present invention will be described with reference to FIGS. 1 and 2. FIG. 1 illustrates an internal structure of the image acquisition device of the present invention, and FIG. 2 illustrates the internal structure of the image acquisition device from the side.

The camera 100 is for detecting fluorescence excited and generated by excitation light, and a commonly used optical camera may be used. In general, a fluorescent substance used in an immunoassay may have an emission peak of 400 to 800 nm. That is, the fluorescence excited and generated by the excitation light in the sample is generally within a visible light range, and therefore, a commonly used optical camera may be used for the camera 100.

However, when the fluorescence generated from the sample has multiple colors, each camera may be installed to observe each color separately. As an example, three types of cameras may be installed to detect red, blue, and yellow, and a dichroic mirror that may selectively reflect each color may be installed on a front portion of the camera to separate a light path according to each color. Describing this in detail, fluorescence generated from a sample may be detected by the first camera by separating colors of some wavelengths using a first dichroic mirror, and light passing through the first dichroic mirror may be separated into some wavelengths again through the same process in the second dichroic mirror. Light having the remaining wavelengths may be detected by a third camera. That is, the fluorescence generated from the sample may be separated into three according to the wavelengths by passing through the two dichroic mirrors and incident on each camera, and each camera may measure a maximum peak wavelength of each fluorescence by calculating a difference in intensity of the incident light. Therefore, since the peak wavelengths of the fluorescence generated are different depending on a type of fluorescent substances attached to each sample, it is possible to determine the type of each sample.

A light source 310 is installed to supply the excitation light to the sample 200 and may serve to supply light for exciting the fluorescent substance included in the sample 200. In general, in a fluorescence microscope, the excitation light often uses a short-wavelength laser. However, large equipment or a lot of power is required to generate the laser. Therefore, recently, the fluorescence microscope using a light emitting diode (LED) as a light source has been widely used to miniaturize the overall equipment. The light emitting diode may not only use a small amount of energy due to high power conversion efficiency, but also contribute to miniaturization of equipment due to its very small size.

In this case, the light emitting diode may supply light having a wavelength at which the fluorescent substance included in the sample 200 may be excited. Specifically, it is preferable to generate excitation light having a wavelength of 400 to 700 nm. In addition, the light emitting diode may use a light emitting diode that generates short-wavelength light, but a light emitting diode that may emit light of 400 to 700 nm in a continuous spectrum may be used, and by using an appropriate excitation light filter according to each fluorescent substance, excitation light of a desired wavelength may be formed.

Describing this in detail, the light emitting diode generally generates light of a single color. That is, the light emitting diodes may emit red, green, or blue light, and some diodes may also emit ultraviolet light. In the case of the present invention, a light emitting diode that emits ultraviolet light is used, but a light emitting lens including a fluorescent substance excited by infrared light is installed above a light emitting body, so a light emitting diode capable of forming the entire wavelength of visible light may be used. That is, a light emitting semiconductor in the light emitting diode may generate infrared light, but since the fluorescent substance included in the light emitting lens is excited by the infrared light and emits light, it is possible to form light of a desired spectrum. In addition, in the case of applying this, it is possible to supply light having various wavelengths only by replacing the light-emitting lens without replacing the entire light-emitting diode.

In addition, the light emitting diode may be supplied with power with a voltage of 1 to 5 V and a current of 100 to 500 mA to adjust a light amount to 20 to 200 lm. The light amount is known to be proportional to the supplied voltage and current, and it is known that the general light emitting diode is supplied with a voltage and current below a certain level or less to generate light. When the voltage and current within the above range are supplied, the light emitting diode may have an appropriate light amount, minimize heat generation, and have a long life. However, when the voltage and current are below the above range, the light amount may decrease, so it may be difficult to excite light and when the voltage and current exceed the above range, the heat generation may become severe, so the lifespan may be shortened.

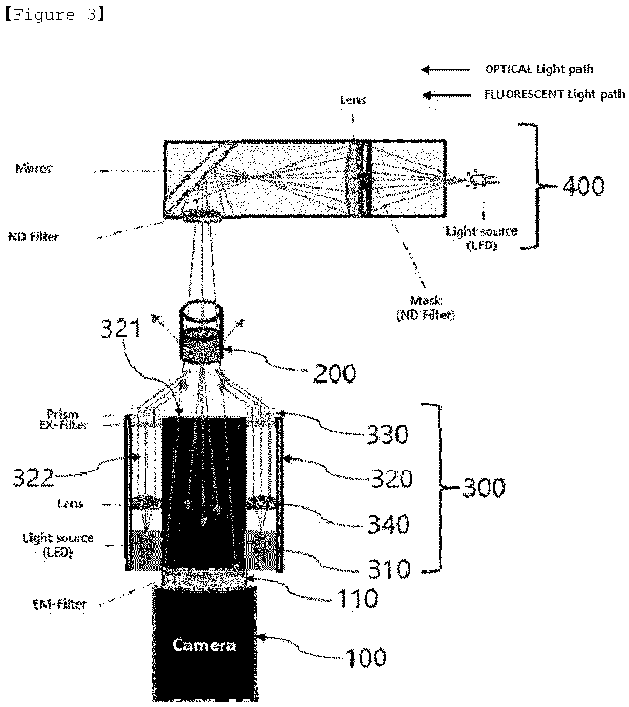

In addition, the light source 310 may include an excitation filter that transmits a wavelength of 466 nm to 526 nm in a bandwidth of 60 (see FIG. 3). As discussed above, the light source may generate light having a wavelength of 400 to 700 nm. However, the commonly used excitation light has a peak wavelength of 466 nm to 526 nm. When excitation light having a wavelength other than the excitation light is supplied, it may be reflected from a sample and observed as a false positive. Therefore, by using the excitation filter, a wavelength portion other than the excitation light may be blocked.

In addition, the light source 310 may include a heat dissipation unit for discharging heat generated from the light source. The heat dissipation unit may serve to discharge the heat generated from the light source, and may use a heat dissipation fin simply arranged around the light source and also transmit heat generated from the light source to other parts using a heat medium and process the heat. Describing this in detail, one end of a heat pipe including a heat source inside may be installed in a heating unit of the light source, and a heat dissipation fin or a cooling unit may be installed at the other end of the heat pipe. Through this, the heat generated from the light source may be transmitted to the heat dissipation fin or the cooling unit through the heat pipe and processed. When the heat generated from the light source is not quickly discharged to the outside, not only may the light source unit be damaged, but heat may also be transmitted to the generated excitation light, causing a haze. Therefore, by installing the heat dissipation unit as described above, the heat generated from the light source may be quickly discharged.

The light source 310 may be arranged outside the camera 100 in a circular shape (see FIG. 3). In general, since the excitation light generated from the light source has linearity, when the light source is disposed on only one side of the camera, shadow may occur depending on the direction. In addition, since the light amount increases only in the direction in which the light source is disposed, there is the disadvantage in that the intensity of the generated fluorescence is not constant (asymmetry). Therefore, in the case of the present invention, in order to resolve the asymmetry of the excitation light, a plurality of light sources are installed, but disposed outside the camera in a circular shape, thereby minimizing the asymmetric supply of the excitation light.

In addition, as a method for resolving the existing asymmetry, a method was used in which a strong light source is installed below a camera, and light generated from the light source is refracted and supplied to a periphery of the camera. However, in this case, the camera may malfunction due to the heat generated from the strong light source, and fluorescence images supplied to the camera may be distorted due to the heat generated from the light source. In addition, a method of supplying excitation light using a dichroic mirror is also widely used. However, since not only the image quality of the fluorescent image obtained by the dichroic mirror is deteriorated, but also the light amount may decrease when reflected using the dichroic mirror, there is an advantage in that a strong light source should be used to obtain the desired fluorescence images.

However, in the case of the present invention, a plurality of small light sources (light emitting diodes 310) are arranged on a main surface of the camera 100 in a circular shape, and then the excitation light is supplied using the small light sources, thereby minimizing the asymmetry of the excitation light while achieving energy savings and miniaturization of the device.

In this case, 2 to 30 light sources 310 may be installed at uniform intervals. As discussed above, when only one light source is used, the asymmetry of the excitation light may appear, and when the number of light sources exceeds 30, the number of light sources increases, which may excessively increase the size of the device.

Since the light emitting diode of the present invention emits excitation light that spreads in a hemispherical shape, it is preferable to use only light irradiated at a certain angle as excitation light by appropriately controlling the emission. When the light emitted in the hemispherical shape is used, excitation light may be supplied to an undesired part to form fluorescence, and it may be difficult to supply uniform light. The method and device will be described later.

An excitation light lens 340 may be installed above the light source to focus the excitation light generated from the light source. As described above, a general light emitting diode emits light in a hemispherical direction. When such a light emitting diode is used as it is and the remaining excitation light other than the excitation light having a certain direction is blocked, a lot of light loss may occur. Therefore, it is preferable to install an excitation light lens above the light source and primarily focus the excitation light generated from the light source.

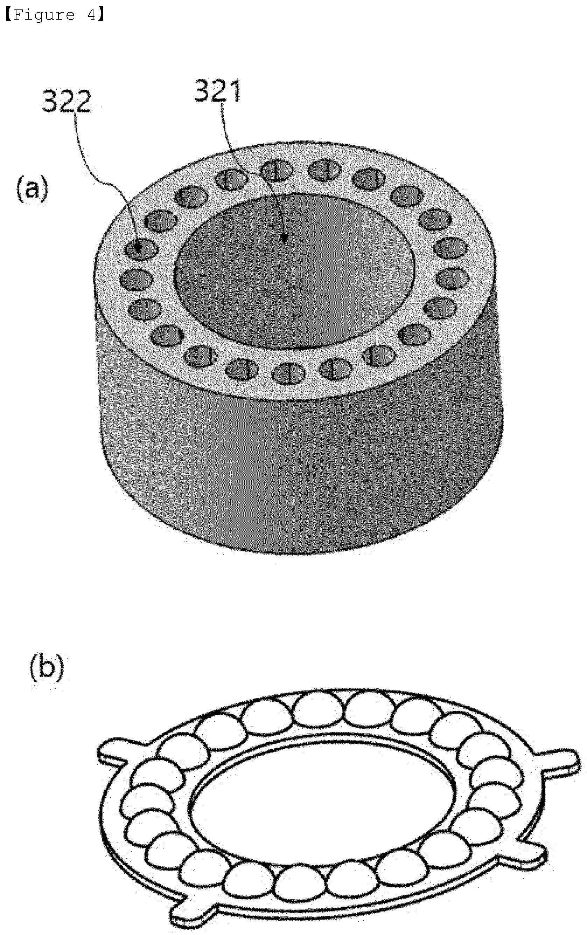

In this case, the excitation light lens 340 may be installed independently for each light source, but may also be formed in a donut shape so that one lens covers the entire light source (see FIG. 4B). In other words, the excitation light lens may be installed independently for each light source, and may be manufactured into a donut shape by processing a single lens, and the entire excitation light lens may be manufactured integrally.

When the excitation light lens 340 is manufactured integrally, it is preferable to form each protrusion on the upper portion of the light source (FIG. 4B). In this case, the protrusion serves as a kind of convex lens and may focus the light generated from the light source in one direction. In the case of the existing donut-shaped lens, a cross-section of the donut-shaped lens is manufactured as a semicircle to focus the light generated from the light source in a certain direction. However, such an existing lens may focus the light that spreads in the cross-sectional direction of the donut-shaped lens, but has a limitation in focusing light that falls in a tangential direction of the lens. Therefore, in the case of the present invention, the excitation light lens 340 is manufactured in the donut shape, and by forming the protrusion on each light source, it may have the same effect as installing the convex lens on each light source. The integrated excitation lens 340 has the advantage in that the installation costs are low compared to installing each excitation lens in each light emitting diode, and that, since the lens exchange may be done at once, the entire lens can be replaced at once when the focal length needs to change or the color of the excitation lens needs to change.

As described above, the excitation light focused by the excitation lens 340 may pass through a shielding guide 320 (see FIG. 3). The shielding guide 320 may operate as a type of filter that passes only vertical light of the light generated from the light source. As described above, the excitation light generated from the light source 310 may pass through the excitation lens 340 and be focused at a certain angle. However, even if the excitation light passes through the excitation lens 340, the excitation light travels straight at a certain angle. In addition, the excitation light that does not pass through the excitation lens may be diffused to the periphery and irradiated upward (ambient light). Therefore, it is preferable to use the shielding guide 320 to remove the ambient light and the excitation light emitted at a certain angle or more.

To this end, the shielding guide 320 may include a central guide part 321 that is formed in a center of the shielding guide and through which the fluorescence signal generated from the sample passes, and an excitation light guide part 322 that is installed on the outside of the central guide part at regular intervals and through which the excitation light generated from the light source passes.

In the case of the present invention, a camera 100 is installed at the center, and the light source 310 is arranged around the camera in a circular shape (see FIG. 3). Therefore, it is preferable that the shielding guide 320 is also manufactured in a shape corresponding thereto.

Describing in detail, the central guide part 321 through which the fluorescence generated from the sample may pass may be formed at the center of the shielding guide. The central guide part 321 is a part that is formed between the sample and the camera and through which fluorescence generated from the sample passes. The camera may be installed under the central guide part 321 and the sample may be positioned above the central guide part 321. In other words, the fluorescence of the sample excited and generated by the excitation light of the light source may be observed by the camera through the central guide part (see FIGS. 3 and 4A).

In this case, it is preferable that a diameter of a lower end of the central guide part has a diameter similar to that of the outermost lens 110 of the camera. When the diameter of the central guide part is excessively larger than that of the outermost lens 110 of the camera, light may enter between the camera lens and the central guide part 321, which may reduce the resolution during observation. On the other hand, when the diameter of the central guide part is excessively smaller than that of the outermost lens 110 of the camera, a field of view of the camera may become narrow.

In the present invention, the term "outermost lens of the camera" means the lens positioned at the outermost side in the arrangement of the camera lens, and generally means the lens that external light first contacts. In general, the diameter of the outermost lens of this camera may be expressed as a lens aperture.

In addition, the central guide part 321 may be manufactured to have the same diameter from the upper portion to the lower portion, but when the size of the sample and the size of the outermost lens 110 of the camera are different, it may be manufactured to have a tapered shape to match each size. In other words, when the diameter of the outermost lens of the camera is excessively larger than the size of the sample unit in which the sample is installed, the central guide part 321 may be manufactured in a form in which the diameter of the sample unit side decreases and the diameter of the outermost lens part of the camera increases, or vice versa. In this way, it is possible to effectively transmit the fluorescence generated from the sample to the camera.

The excitation light guide part 322 may be arranged outside the central guide part 321 (see FIG. 4A). The excitation light guide part 322 is a part through which the excitation light generated from the light source passes and that supplies the excitation light to the sample, and is formed in the same direction as the central guide part but the direction of the light passing through the inside is the opposite.

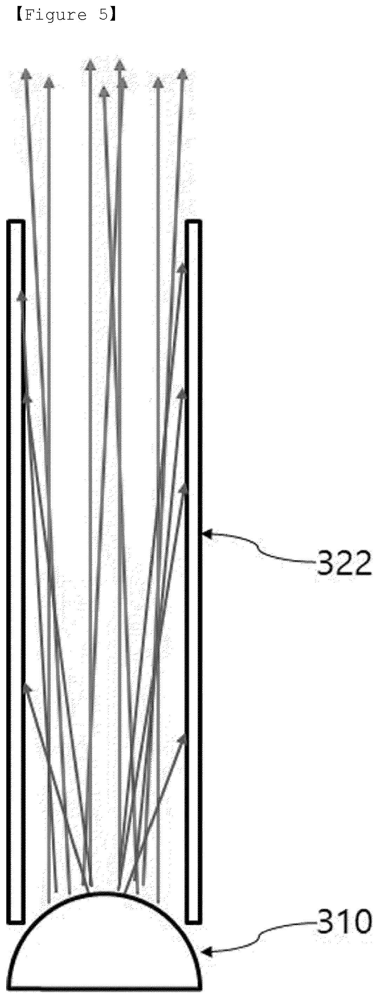

The excitation light guide part 322 may absorb and remove the remaining portion of the excitation light except for the excitation light having a certain angle (see FIG. 5). Describing this in detail, it is preferable that the excitation light is supplied so as to have a narrow angle in order to generate the uniform fluorescence. When the excitation light is supplied to have a wide angle, the excitation light may be supplied to a part other than the desired part, and the light other than the fluorescence of the sample may be observed. In addition, to prevent this, when an irradiation range of the excitation light decreases, there may be the case where the excitation light is not supplied to the peripheral part. Therefore, in the case of the present invention, the excitation light having a certain angle or more is removed by passing through the excitation light guide part 322, so the fluorescence of the sample can be obtained at a higher resolution.

Describing the principle of the excitation light guide part 322 in more detail, the excitation light guide part 322 is manufactured in a cylindrical shape on the inside, and the excitation light can pass through the inside. In this case, since the excitation light passes through a long cylinder, only the excitation light having a certain angle may pass through without being reflected inside the excitation light guide part, and the excitation light having a certain angle or more comes into contact with an inner surface of the excitation light guide part. In other words, when a light-absorbing coating layer is formed on the inner surface of the excitation light guide part, it is possible to remove the excitation light that comes into contact with a wall surface of the excitation light guide part and has a certain angle or more (see FIG. 5). The existing excitation light filter uses a filter that is simply opened in the shape of a slit or dot is used, but, in this case, may have limitations in removing off-angle excitation light and also reduce the light amount of the passing excitation light. Therefore, in the case of the present invention, by optimizing the length of the excitation light guide part, it is possible to supply excitation light with a high light amount while supplying only excitation light less than a certain angle.

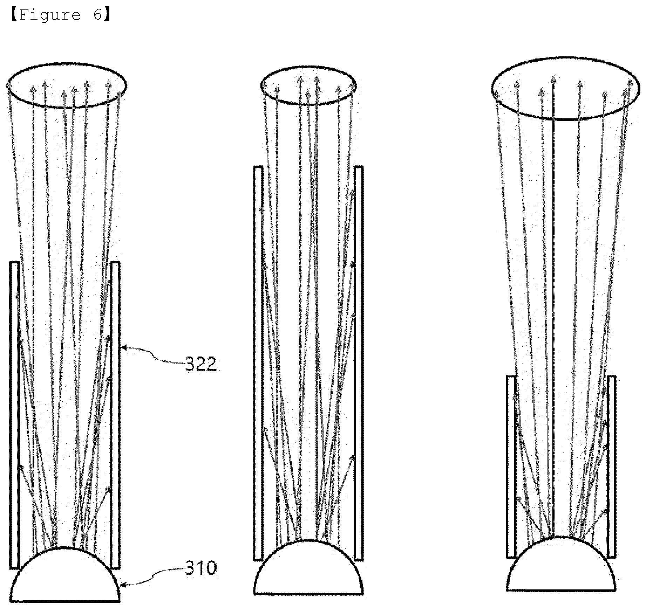

To this end, when the internal diameter is R and the length from the point of contact with the excitation light to the top end is L, the excitation light guide part may have R/L of 0.05 to 0.5. As described above, the excitation light guide part has a certain length and may remove excitation light having an angle greater than a certain angle. However, when the length of the excitation light guide part becomes longer than a certain length, the size of the entire system may increase, and the light amount of the excitation light supplied to the sample may decrease (the second figure of FIG. 6). In addition, when the excitation light guide part becomes shorter than a certain length, the irradiation range may become excessively wide, so the effect of the excitation light guide may decrease (the third figure of FIG. 6). However, when the diameter of the excitation light guide part becomes larger, the angle of the passing excitation light becomes larger, and the light amount also increases, so the length of the excitation light guide part must become longer. Therefore, the inner diameter and length of the excitation light guide part may have a certain ratio. When the R/L is less than 0.05, the length of the excitation light guide part becomes excessively long, and the light amount of the supplied excitation light may decrease, and when the R/L exceeds 0.5, the angle of the supplied excitation light becomes larger, so the resolution of the fluorescence images may decrease.

Despite the ratio, it is preferable that the inner diameter of the excitation light guide part 322 is 2 to 5 mm. The light emitting diode used for the light source often has a size of less than 5 mm, and in the case of the present invention, it is preferable to use a light emitting diode having a size of 2 to 5 mm for the light source 310 in order to miniaturize the device. Therefore, it is preferable that the inner diameter of the excitation light guide part is 2 to 5 mm so as to be similar to the size of the light emitting unit of the light emitting diode. When the inner diameter of the excitation light guide part 322 is less than 2 mm, the passing excitation light decreases, and the fluorescence light amount of the sample may be insufficient, and when the inner diameter of the excitation light guide part 322 exceeds 5 mm, the size of the device may increase and the resolution of the image may decrease. In addition, the length of the excitation light guide part may be 10 to 50 mm so as to have an appropriate ratio to the inner diameter of the excitation light guide part. In addition, the length of the excitation light guide part may mean the entire length of the excitation light guide part, but may also mean the length from the point of contact with the excitation light to the top end.

The light-absorbing coating layer may be formed inside the central guide part 321 or the excitation light guide part 322. As described above, the inside of the excitation light guide part requires a coating layer that absorbs light. In addition, separately from this, the central guide part may also be formed with a light-absorbing coating layer to remove an image reflected from the wall surface of the central guide part. That is, the present invention acquires the fluorescence images while supplying the excitation light through the shielding guide, but may increase the resolution and accuracy of the image by minimizing the reflection of light by the wall surface of the shielding guide. In this case, the light-absorbing coating layer may be used without limitation as long as it is the coating layer that may absorb the excitation light and fluorescence, but preferably, may include carbon black, carbon nanotube, or graphene. Since the carbon black, the carbon nanotube, or the graphene have a black color by themselves, the absorption of light is easy, and in particular, in the case of the carbon nanotube, the light incident on one side of the tube may be diffusely reflected and absorbed inside the tube structure. In addition, since the graphene has a two-dimensional structure, the incident light may be reflected and absorbed between each graphene layer. In other words, when the carbon nanotube and the graphene are included in the light-absorbing layer, a higher light absorption effect may be achieved.

In addition, the light sources 310 may be independently installed in each of the excitation light guide parts 322 (see FIG. 3). That is, one light guide part may be installed above each light source, and accordingly, the excitation light generated from each light source is preferably supplied toward the sample by passing through the excitation light guide part 322. As described above, since it is preferable that 2 to 30 light sources are installed, it is also preferable that 2 to 30 excitation light guide parts are installed.

In addition, the light source 310 may be installed outside the excitation light guide part 322, but some or all of the light sources 310 may be installed inside the excitation light guide part 322. When the light source is installed outside, it may have the advantage of easy heat dissipation heat and easy installation and maintenance, but when the alignment with the excitation light guide part is misaligned, the excitation light supplied to the sample may decrease. In addition, when the light source is installed inside the excitation light guide part, the overall size of the device increases, and it may have the advantage of making the dissipation of heat generated from the light source difficult, but once the light source is aligned, the alignment of the light source may be prevented from being misaligned even when applied with the impact.

A prism 330 is installed above the shielding guide and may refract light (excitation light) passing through the excitation light guide part 320 toward the sample (see FIG. 3). In this case, it is preferable to use a prism that is arranged above the shielding guide in a donut shape or manufactured in the donut shape so as not to interfere with the observation of the fluorescence of the sample.

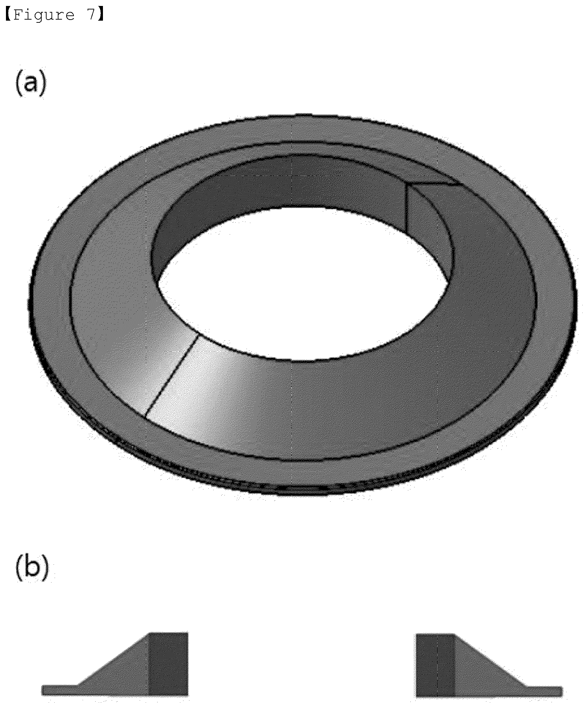

FIG. 7A illustrates the prism of the present invention, and FIG. 7B illustrates a cross section of the prism.

The prism is used to focus the excitation light toward the center where the sample is positioned, and as illustrated in FIG. 7A, the prism may be installed above the excitation light guide part in the donut shape and may be manufactured so that its inner side portion is higher than an outer side portion. That is, in the case of the prism of the present invention, the upper portion may form a diagonal line that becomes lower as it goes outward. In addition, the upper portion of the prism may have an angle of 30 to 40°, preferably 31 to 38°, and most preferably 35.5° with respect to the horizontal plane, that is, the surface that comes into contact with the excitation light guide part. When the angle of the upper portion is less than 30°, the excitation light is not focused toward the center, so the uniformity of the excitation light may be lowered. When the angle exceeds 40°, the light amount of the peripheral portion may decrease, so the uniformity may be lowered.

In addition, in the case of the prism, the height of the inner side portion may be 3 to 8 mm, preferably 6 to 7 mm, and more preferably 6.4 mm, in order to cover the entire of the excitation light guide part. When the height of the inner side portion is less than 3 mm, the entire excitation light generated from the excitation light guide part may not be refracted, and when the height of the inner side portion exceeds 8 mm, the size of the prism becomes excessively large, so that external light other than the excitation light is introduced, which may lower the signal-to-noise ratio.

The image acquisition device may acquire the fluorescence images with a magnification of 0.5 to 2 times. In the case of the existing fluorescence microscope, it is common to acquire an image magnified 2 to 100 times due to low resolution. This is because, as discussed above, the resolution of the image may decrease due to the use of a large number of dichroic mirrors, and the uniformity and clarity may decrease due to the imbalance of the excitation light. Therefore, most fluorescence microscopes observe only a part of particles to which one well or the entire target material is attached. However, in the case of the present invention, since the uniform excitation light can be supplied without using the dichroic mirror, it is possible to acquire a high-resolution image. Therefore, unlike the existing fluorescence microscope, according to the present invention, it is possible to acquire an image with a magnification of 0.5 to 2 times, and preferably, 1 time, which means that it is possible to simultaneously acquire and analyze the image of the entire sample unit.

The image acquisition device may have a uniformity of 70% or more, as expressed by Equation 1 below. Uniformity = (min for fluorescence signal of each pixel area divided from the entire image analysis area/max for fluorescence signal of each pixel area divided from the entire image analysis area) × 100(%)

The uniformity indicates the difference between the maximum and minimum values of the fluorescence signal among each pixel area divided from the entire image analysis area, and it is generally known that the higher the uniformity, the more uniform light is supplied. In particular, in the fluorescence microscope, the fluorescent substance is excited by the excitation light. In this case, the analysis is performed through the intensity and amount of fluorescence observed, so it is very important to supply uniform excitation light within the observable area. In the case of the present invention, the uniformity expressed by the above Equation 1 may be 70% or more, preferably 80 to 100%, and more preferably 85 to 96%. When the uniformity is less than 80%, it may be difficult to supply uniform excitation light, so additional correction may be required or incomplete observation may occur. In addition, since 100% means that the same light is supplied to the entire area, a value higher than this is impossible.

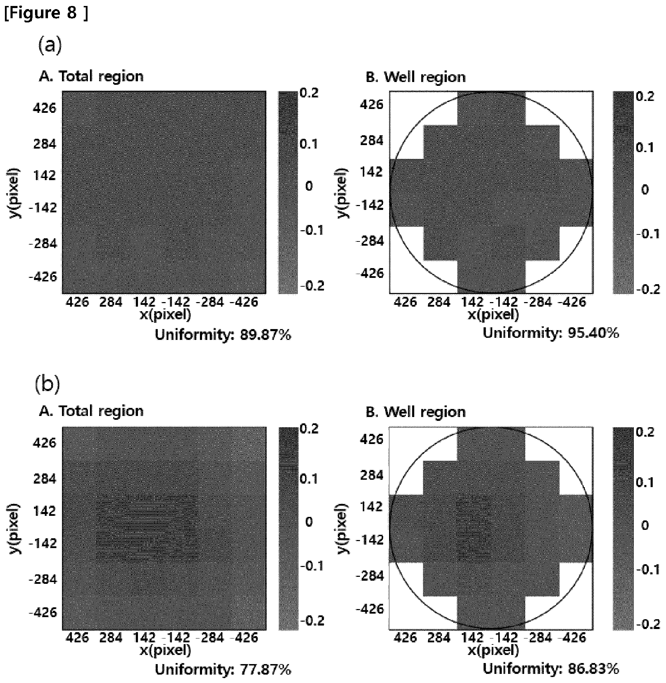

In addition, the uniformity may be divided into the uniformity of the entire area and the uniformity of the observable area (see FIG. 8), and although it is desirable that the uniformity of the entire area is high, it is more preferable that the uniformity of the observable area is high. In particular, since the area observed by the fluorescence microscope corresponds to the pixel of the observable area, not the pixel of the entire area, it is preferable that the uniformity of the observable area be 80% or more.

The sensitivity of the image acquisition device to fluorescence may have 5 times higher than that of the existing fluorescence microscope. In this case, the sensitivity may be expressed as mean fluorescence intensity (MFI) as an average value for the intensity of the fluorescence signal.

It is generally known that the sensitivity to the fluorescence increases as the higher fluorescence value is observed under the same conditions. In the case of the image acquisition device of the present invention, a lens of the same magnification may have a sensitivity of 5 times or more, preferably 5 to 20 times, and more preferably 8 to 12 times, than that of the existing low-magnification fluorescence microscope under the conditions of use. That is, the image acquisition device of the present invention may obtain a fluorescence value 5 times higher or more than that of the existing low-magnification fluorescence microscope when using a lens under the same conditions, and in order to obtain the same fluorescence value as that of the present invention using the existing fluorescence microscope, the high-magnification fluorescence microscope using a high-magnification lens should be used or the exposure time to the excitation light should increase. However, as described above, when the high-magnification lens is used, the area that can be observed at one time may decrease, which may increase the overall analysis time, and when exposed to the excitation light for a long time, the signal-to-noise ratio may decrease, and at the same time, photobleaching may occur.

The present invention relates to an image acquisition device for detecting a target material signal, including: (i) a camera for detecting a fluorescence signal and an optical signal; (ii) a sample unit that is installed at a certain interval from the camera; (iii) a fluorescence unit that supplies excitation light from the camera toward the sample unit; and (iv) an optical section that is installed at a certain distance from the sample unit in an opposite direction to the camera and supplies visible light toward the camera, wherein the fluorescence unit includes: (1) light sources that are disposed outside the camera at regular intervals in a circular shape; (2) a shielding guide that is positioned above the light source and transmits only vertical direction light of light emitted from the light source; and (3) a prism that refracts the light passing through the shielding guide toward a sample.

In the case of the general fluorescence microscope, only the fluorescence generated by exciting the fluorescent substance in the sample may be observed. However, in this case, a non-luminous sample cannot be observed, and thus, only the presence or absence of the fluorescence can be confirmed, and additional test should be performed to determine the ratio and type of the sample. However, when the optical observation is performed in parallel, even non-luminous samples may be observed, making it easier to observe whether the fluorescence is present in the sample. However, since the formation mechanisms of the fluorescence signal and the optical signal are different, each light source should be used, and in particular, in the case of the fluorescence signal, in order to maximize the fluorescence of the sample, the supply of the excitation light should be performed in the same direction as the camera, so it is necessary to optimize the disposition of the excitation light for the generation of the fluorescence signal and the observation light for the generation of the optical signal.

In the case of the present invention, since the position and quantity of the sample is specified using the optical signal, it is preferable that the observation light of the optical signal is supplied from the opposite side of the sample (see FIG. 3). In the case of the existing optical microscope, the light source is supplied from an objective part to easily observe the shape of the surface, but in the case of the present invention, since only the appearance such as the size, position, and quantity of the sample needs to be observed, the observation light may be installed as a transmission type. That is, in the case of the present invention, the excitation light for the fluorescence image is supplied from the same direction as the camera, and the observation light for the optical image is supplied from the opposite direction to the camera, so that the optical image and the fluorescence image may be acquired selectively or simultaneously.

A configuration of a fluorescence unit 300 used above and the configuration of the camera 100 are the same as described above, and therefore, a description thereof will be omitted.

The sample unit 200 is a part where the sample is fixed and secured, and may be provided with a well plate in which a sample is directly disposed or that includes a sample.

In chemical, biochemical, and/or biological analysis, a multi-well plate is a standard tool for processing and analyzing a plurality of samples. The multi-well plate may take on various shapes, sizes, and forms, but is generally made in a standard size and shape and has a standard arrangement of wells. The standard arrangement of wells includes a 96-well plate (12×8 well arrangement), a 384-well plate (24×16 well arrangement), and a 1536-well plate (48×32 well arrangement), and various other types of commercial multi-well plates may be used. In the case of the present invention, the well plate including the sample is used in the sample unit, but since the well plate has a similar specification to a commercial multi-well plate, it may be easily compatible with various conventional biological analysis technologies.

The sample may include magnetic particles. In a general immunological analysis method, a fluorescent substance is attached to an antibody, and then a specimen is supplied to a solution containing the antibody, and an antigen is attached through an antigen-antibody reaction to perform a test. However, there is a disadvantage in that it is not easy to separate non-competing antibodies. In the case of the present invention, the antibody is attached to the magnetic particle and then the antigen-antibody reaction is performed using the antibody, so the handling during immunodiagnosis may be facilitated.

To this end, the magnetic particle may be formed in a microrod or spherical shape, and preferably may have the microrod shape.

Hereinafter, the magnetic particle of the present invention will be described based on having the microrod shape.

The magnetic particle of the present invention may include a core containing a magneto-reactive metal; a shell layer having a uniform thickness surrounding the core; and a capture probe introduced on the shell layer to capture a biological substance.

The core part may include a magneto-reactive metal, preferably a magnetic metal or a metal alloyed with a magnetic metal. The magnetic metal may be an alloy containing iron (Fe), nickel (Ni), cobalt (Co), and manganese (Mn). The magneto-reactive metal may include a transition metal such as iron, nickel, cobalt, and manganese as a main component, and a rare earth metal such as gadolinium (Gd), terbium (Tb), and samarium (Sm), and may include boron (B), silicon (Si), carbon (C), and the like. Representative examples of the magneto-reactive metal may include an iron alloy or a cobalt alloy. A specific example of the iron alloy may include Fe₇₀B₁₅Si₁₀C₅, and an example of the cobalt alloy may include Co₆₈Mn₇Si₁₀B₁₅. In addition, the magnetic metal may be mixed or alloyed with copper (Cu), gold (Au), silver (Ag), iron (Fe), or platinum (Pt), and more preferably, may include a superparamagnetic metal. Although the core part does not directly have magnetism, it may be magnetized as a magnet approach and may have an attractive force with the magnet, and thus may be usefully used for movement and mixing using a magnet. However, in the case of the present invention, it is preferable to use a paramagnetic substance rather than a ferromagnetic substance, which is to reduce the formation of agglomeration due to the magnetic attraction between each magnetic particle when the magnet is removed. In this case, when the ferromagnetic substance is used, the individual fluorescence observation of each particle may not be easy due to the agglomeration phenomenon. Therefore, it is preferable that the core part of the present invention use ferromagnetic particles. In addition, it is preferable that the magnetic particles have a size and specific gravity that do not float in water so that it may be quickly collected or separated by an external magnet such as a permanent magnet or an electromagnet.

The core may occupy 60% or more of the total volume of the magnetic particles. For example, the core may be 60 to 99%, preferably 75 to 99%, of the total volume of the magnetic particles. In addition, the magnetic particles may have a size (e.g., diameter or length) of several tens to several hundred µm, and the specific gravity is preferably 5 or more, for example, 5 or more and 30 or less. When the magnetic particles 130 are nanoparticles having a size of less than 1 µm, even if the magnetic particles 130 have a high specific gravity (e.g., 7.876 in the case of iron), they may float in water. In this case, in a bioassay process that detects a biological substance in a well using the magnetic particles, the magnetic control of the magnetic particles may not be smooth due to the low magnetic force of fine particles when a magnetic field is applied, which may cause difficulties in separation. When a magnetic rod moves up and down in the well to promote an immune response, the fine particles are detached and attached. During the process of moving the magnetic rod up and down, the magnetic particles once attached to the magnetic rod may not fall back to the floor of the well due to their low weight even when the magnetic field is removed, but may continuously remain in the magnetic rod by nonspecific binding. In this case, the reproducibility of quantitative analysis may decrease when detecting the biological substances in the well.

Meanwhile, the magnetic particles have a core-shell structure by having the magnet-reactive metal in the center and the shell layer surrounding the same. The shell layer may be made of an organic or inorganic material, and is preferably glass.

The glass may be a compound selected from the group consisting of soda lime, borosilicate, aluminosilicate, silica, alkali silicate, Pyrex, and quartz as its main component. It is preferably for experiments requiring heat resistance, acid resistance, and water resistance, and may be borosilicate that may minimize non-specific binding with antibodies.

The shell surface may include a hydrophilic functional group.

The shell surface may be coupled to a capture probe to be described later, including various functional groups, the functional group is a hydrophilic functional group, and the hydrophilic functional group may be a silanol group or a carboxyl group, an amino group, a hydroxyl group, a thiol group, or an aldehyde group derived from the silanol group. More preferably, the functional group may be the silanol group.

In addition, the hydrophilic functional group may directly be combined with the capture probe, but the hydrophilic functional group and the capture probe may preferably be combined using a linker. The linker is positioned between the hydrophilic functional group and the capture probe so that the capture probe may be easily attached to the shell layer, and preferably, a silane compound, more preferably, amino-silane, and most preferably, 3-aminopropyltrimethoxysilane (APTES) may be used.

The magnetic particles may include the capture probe introduced on the shell layer to capture a biological material (antigen), and the capture probe may be an antibody that uses a biomarker as an antigen.

1 to 80/nm² hydrophilic functional groups may be introduced into the surface of the shell.

Since the linker or capture probe is attached to the magnetic particle by being combined with the hydrophilic functional group of the shell layer, the number of linkers or capture probes that can bind may be determined according to the number of hydrophilic functional groups. Therefore, when the plurality of hydrophilic functional groups are formed on the surface of the magnetic particle, it is possible to attach a large amount of linkers or probes to the surface of the magnetic particle. In this case, when the density of the hydrophilic functional group is less than 1/nm², the measurement may be difficult due to the low fluorescence when measuring the fluorescence, and when the density of the hydrophilic functional group exceeds 80/nm², there may be no further increase in fluorescence due to interference between probes when binding the probes.

An optical unit 400 is a part that supplies visible light for optical observation to the sample unit and may include a light source using a light emitting diode (see FIG. 3). In this case, the light source used may be the light source using the light emitting diode (LED), and unlike the fluorescence unit, since the light source emits visible light that travels straight, an optical lens formed on the front portion of the light emitting diode may be used. That is, the fluorescence unit has a structure including a shielding guide to avoid interference with the camera, but the optical unit can simply use LED lighting since it is free from such interference.

In this case, the light source of the optical unit 400 may be supplied with power having a voltage of 1 to 5 V and a current of 1 to 50 mA, and the light amount may be adjusted to 1 to 100 lm. The optical observation of the sample is easy within the above range, but when it exceeds the above range, the accurate observation of the sample may be difficult due to the high light amount. Also, when it is below the above range, the observation of the sample seated on the sample unit may be difficult due to the low light amount.

The present invention relates to an image analysis method using an image acquisition device for detecting a target material signal, in which the image acquisition device includes (i) a camera for detecting a fluorescence signal and an optical signal, (ii) a sample unit that is installed at a certain interval from the camera, (iii) a fluorescence unit that supplies excitation light from the camera toward the sample unit, and (iv) an optical section that is installed at a certain distance from the sample unit in an opposite direction to the camera and supplies visible light toward the camera. The image analysis method includes: ① injecting magnetic particles binding to a target material into each well of a multi-well plate; ② fixing the multi-well plate to a sample unit; ③ applying power to an upper optical unit to acquire an optical image; and ④ applying power to a lower fluorescence unit to acquire a fluorescence image.

The above step ① is a step of binding the target material to the surface of the magnetic particle and then injecting the target material into the wheel plate. In this case, the surface of the magnetic particle is formed with the capture probe as described above, and in this case, the capture probe may bind to the target material (antigen). However, in this case, since the observation using the fluorescence is impossible, a second antibody that may bind to another part of the target material is mixed, and the second antibody may contain a fluorescent substance.

In the case of using the second antibody as described above, when the antigen is attached to the surface of the magnetic particle, the second antibody is also attached to the antigen, so the magnetic particles may emit the fluorescence, and when the antigen is not attached, the second antibody is also not attached, so the magnetic particle does not emit the fluorescence. By using this, when each capture probe binds to the magnetic particles having a different length or size, it may compete with a different antigen according to each size, which means that the type of antigen can be read simply by observing the fluorescence. In the case of conventional fluorescence analysis, the spectrum of fluorescence was separated to confirm the peak wavelength of each fluorescence, and through this, a complex method of reading the types of antigens was used. However, in the case of the present invention, it is possible to immediately determine the type of antigens simply by comparing the size of the magnetic particles to which the antigen is attached. In addition, since the fluorescent substances not attached to the antigen may be easily removed from the magnetic particles simply by washing, the fluorescence emission due to the false positives may be minimized.

As described above, the magnetic particles to which the target material binds may be injected into each well of the multi-wall plate.

When the multi-well plate is prepared as described above, the multi-well plate may be fixed to the sample unit. In the case of the sample unit, since a fixing device capable of binding the multi-well plate is formed, it is preferable to use the fixing device to fix the multi-well plate.

When the multi-well plate is attached as described above, power may be applied to the upper optical unit to acquire an optical image. In this case, the light source of the optical unit supplies visible light from the opposite side of the camera based on the sample unit, so the magnetic particles may acquire the image that may confirm the size and quantity rather than directly observing the surface.

After the acquisition of the optical image as described above is completed, power is supplied to the fluorescence unit to acquire the fluorescence image. As described above, the fluorescence image of the present invention is images with a magnification of 0.5 to 2, so that the image of the entire sample unit can be acquired at the same time, which may generate a large-area image and analyze the large-area image at a high speed compared to a conventional fluorescence microscope.

Hereinafter, exemplary embodiments of the present invention will be described with reference to the accompanying drawings so that those skilled in the art may easily practice the present invention. In addition, in describing the present invention, when it is determined that a detailed description for a related known configuration or function may unnecessarily obscure the gist of the present invention, the detailed description will be omitted. Some features illustrated in the drawings have been enlarged, reduced or simplified for ease of description, and the drawings and their components are not necessarily drawn to scale However, those skilled in the art will easily understand these details.

### Example 1

As illustrated in FIGS. 1 and 2, an image acquisition device for detecting a target material signal was prepared. The devices used at this time are as follows.
Camera: ac1920-40um (Basler)
Fluorescence unit light source: 505nm LED (OSRAM, LV CRBP.01)
Optical unit light source: White LED (Seoul Semiconductor, LW514)

Shielding guide: Central guide part (inner diameter of 30mm) is formed in the center, 21 excitation light guide parts (inner diameter of 4mm) are formed on the periphery of the central guide part, the length of the shielding guide is 25mm, and the total outer diameter is 50mm.

Excitation light lens: As illustrated in FIG. 4B, it is manufactured so that a protrusion is formed on the upper portion of the light source.

### Example 2

Example 2 was performed in the same way as Example 1 above, except that only 4 excitation light guide parts were formed in the shielding guide and only 4 fluorescence unit light sources were also used.

### Example 3

Example 3 was performed in the same way as Example 1 above, except that only 1 excitation light guide parts were formed in the shielding guide and only 1 fluorescence unit light sources were also used.

### Example 4

Example 4 was performed in the same way as Example 1 above, except that only 25 excitation light guide parts were formed in the shielding guide and only 25 fluorescence unit light sources were also used.

### Example 5

Example 5 was performed in the same way as Example 1 above, except that the length of the shielding guide was 10 mm.

### Example 6

Example 6 was performed in the same way as Example 1 above, except that the length of the shielding guide was 5mm.

### Example 7

Example 7 was performed in the same way as Example 1 above, except that the length of the shielding guide was 50mm.

### Example 8

Example 8 was performed in the same way as Example 1 above, except that the length of the shielding guide was 60mm.

### Example 9

Example 9 was performed in the same way as in Example 1 above, except that the inner diameter of the excitation light guide part was 2 mm.

### Example 10

Example 10 was performed in the same way as in Example 1 above, except that the inner diameter of the excitation light guide part was 1mm.

### Example 11

Example 11 was performed in the same way as in Example 1 above, except that the inner diameter of the excitation light guide part was 5mm.

### Example 12

Example 12 was performed in the same way as in Example 1 above, except that the inner diameter of the excitation light guide part was 8mm.

### Example 13

Example 13 was performed in the same way as in Example 1 above, except that the light-absorbing paint was not used.

### Comparative Example 1

Comparative Example 1 was performed in the same way as in Example 1 above, except that the shielding guide was not used.

### Comparative Example 2

The same procedure was performed, except that the slit-type light-blocking plate used in the past was used instead of the shielding guide.

### Experimental Example 1

In order to analyze the uniformity of the image acquisition device in the present invention, biotin-conjugated cylindrical magnetic microparticles having a size of 300 µm to were prepared by being treated with a streptavidin-conjugated fluorescent substance.

The prepared fluorescent substance-conjugated cylindrical magnetic microparticles were placed in the reaction well part, and the 852 (horizontal) × 852 (vertical) pixel area appearing in the fluorescence measurement mode of the image acquisition device was divided into 6 (horizontal) × 6 (vertical) equal parts, and the magnetic microparticles conjugated with the fluorescent substance were moved to acquire the fluorescence signal. The uniformity was analyzed using the mix and max values for the fluorescence signals in a total of 36 areas. Uniformity = (min for fluorescence signal of each pixel area divided from the entire image analysis area/max for fluorescence signal of each pixel area divided from the entire image analysis area) × 100(%)

**[Table 1]**

| | Uniformity (%)-total | Uniformity (%)-observable region |
|---|---|---|
| Example 1 | 89.87 | 95.40 |
| Example 2 | 77.87 | 86.83 |
| Example 3 | 61.14 | 76.98 |
| Example 4 | 78.49 | 90.44 |
| Example 5 | 77.31 | 86.69 |
| Example 6 | 63.57 | 71.58 |
| Example 7 | 76.32 | 85.26 |
| Example 8 | 64.18 | 72.45 |
| Example 9 | 78.11 | 81.15 |
| Example 10 | 63.16 | 71.29 |
| Example 11 | 74.73 | 85.28 |
| Example 12 | 69.45 | 72.58 |
| Example 13 | 81.59 | 80.19 |
| Comparative Example 1 | 65.73 | 70.75 |
| Comparative Example 2 | 57.72 | 63.85 |

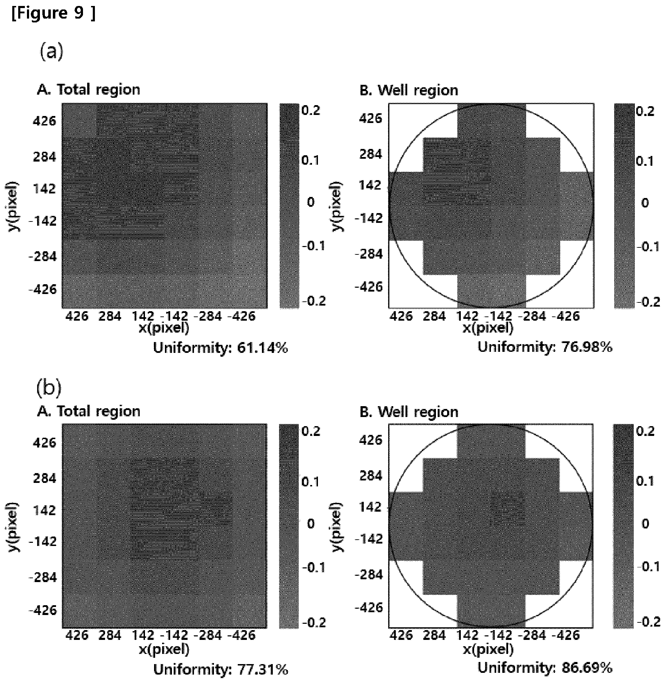

As shown in Table 1, in the case of Example 1 (FIG. 8A) of the present invention, the uniformity, which indicates the ratio of the minimum light amount to the maximum light amount, was high, so there was almost no difference in the light amount. However, when the number of fluorescence unit light sources that generate the excitation light was reduced (Example 2, FIG. 8B) or only one was used (Example 3), it was confirmed that the uniformity was lowered. In particular, in the case of Example 3, where only one light source was used, as illustrated in FIG. 9A, it was confirmed that the light was focused on one side of the observable area. In contrast, when 25 light sources were used (Example 4), it was found that there was no further increase in the uniformity.

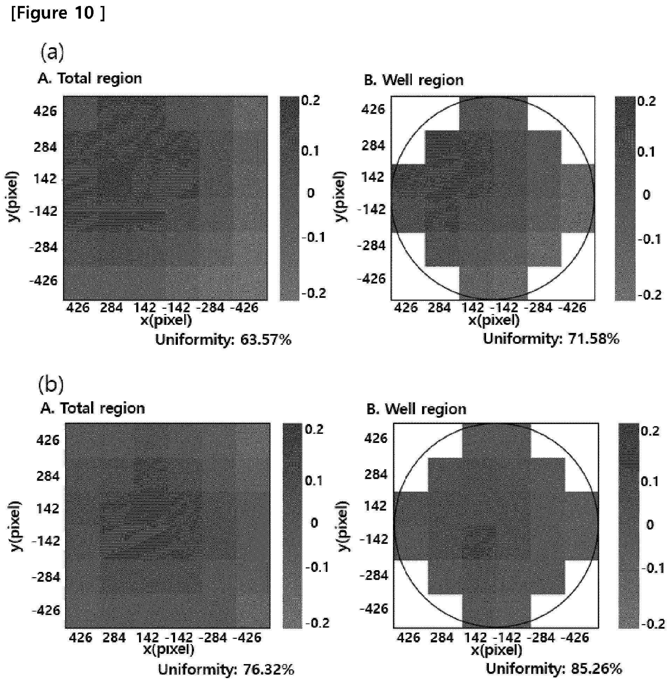

In addition, as the length of the shielding guide was reduced (Examples 5 (FIG. 9B) and 6 (FIG. 10A)), the uniformity was lowered, and in particular, in the case of Example 6 having a thickness of 5 mm, the uniformity was lowered and a large difference in light amount was shown (see FIG. 10A). On the other hand, when the length of the shielding guide increased, that is, when the length of the excitation light guide part was long, if it had a length exceeding a certain length (Example 8, length 60 mm), the intensity of the excitation light passing through the guide was weakened, so it was shown that the difference in light amount occurred.

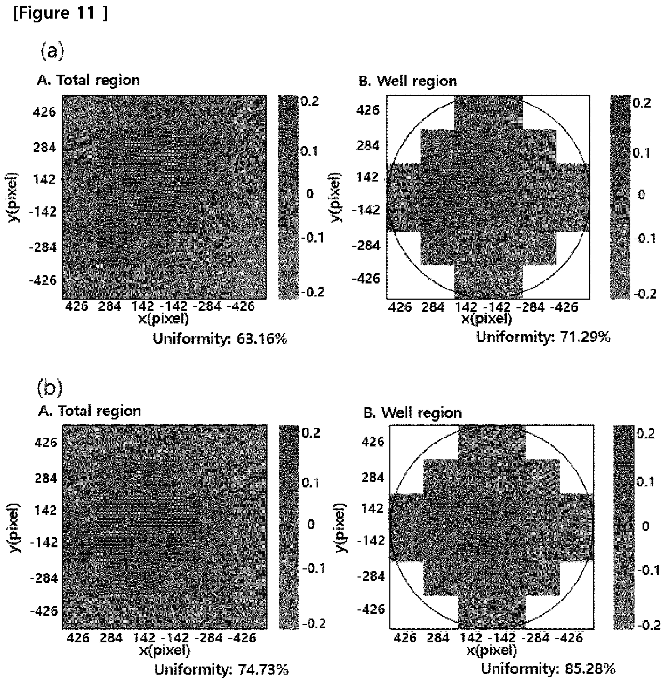

This could be seen in the same way when the inner diameter of the excitation light guide part decreased (Examples 9 and 10), and in particular, in the case of Example 10, where the inner diameter excessively decreased, the overall light amount decreased, and at the same time, the light of the peripheral portion was weakened, so it was shown that the uniformity significantly decreased (see FIG. 11A).

On the contrary, when the inner diameter was increased (Example 11, 12) It could be seen that the light amount decreased, and in particular, in the case of Example 11 where the inner diameter increased, it could be seen that the uniformity was maintained to some extent but the overall light amount decreased (FIG. 11B). Therefore, it could be seen that the excitation light guide part should have a ratio of the inner diameter and length within a certain range.

In the case of Example 13 where the light-absorbing paint was not used, it was shown that the change in uniformity was small because the excitation light was diffusely reflected and passed through the inside.

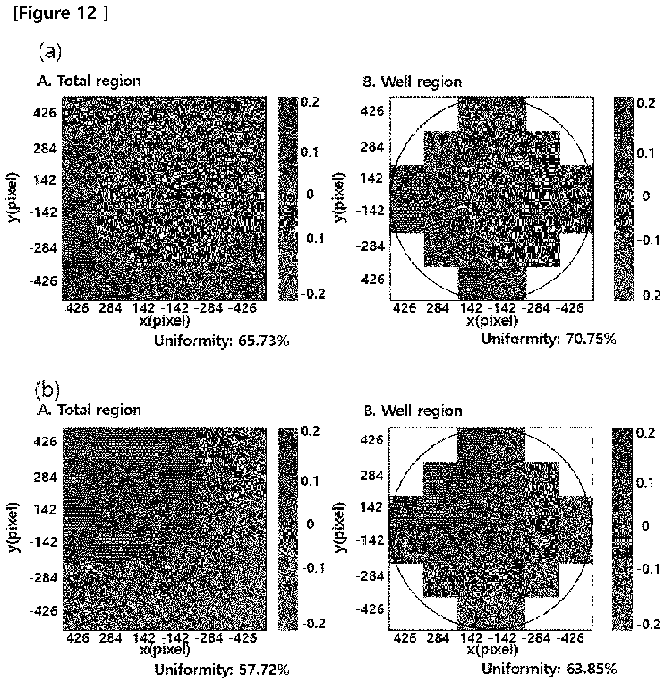

In the case of Comparative Example 1 (FIG. 12A) where the shielding guide was not used, the uniformity was very low and the excitation light leaked out, so it could be seen that the light amount in the center of the light-recognizable area was low. Therefore, it could be seen that using the shielding guide of the present invention may supply the uniform excitation light to the entire sample. In addition, it could be seen that the uniformity greatly decreased when the existing slit-type light blocking plate was used (Comparative Example 2, FIG. 12B), which means that the existing slit-type light blocking plate alone does not supply the uniform light to the sample.

### Experimental Example 2

The prepared fluorescent material-conjugated cylindrical magnetic microparticles were placed in the reaction well part, and measured at the exposure time of 50 ms in the fluorescence measurement mode of the image acquisition device, so the measurement results using 1, 4, and 10x lenses were compared to measure the resolution of the image acquisition device.

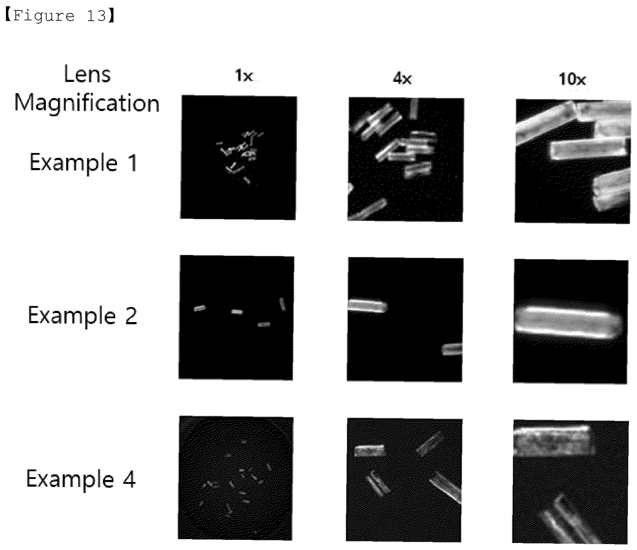

As illustrated in FIG. 13, in the case of Examples 2 and 4, including Example 1 of the present invention, it was shown that even when the 1x lens was used, photographs with high resolution could be acquired. In other words, in the case of the present invention, not only is large-area photography possible using the 1x lens, but also the resolution for normal analysis may be achieved when the photograph is enlarged and analyzed.

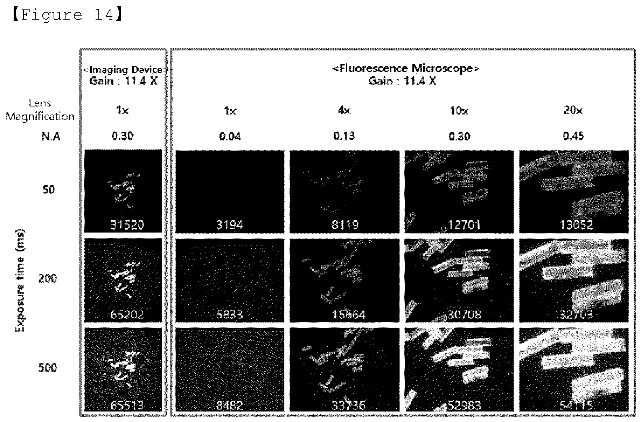

In addition, the experiment was conducted for comparison with the existing fluorescence microscope. As illustrated in FIG. 14, the prepared fluorescent material-conjugated cylindrical magnetic microparticles were placed in the reaction well part and measured at exposure times of 50, 200, and 500 ms in the fluorescence measurement mode of the image acquisition device of Example 1, and in the case of the Comparative Example 3, the same magnetic microparticles were measured at exposure times of 50, 200, and 500 ms using 1, 4, 10, and 20x lenses under the fluorescence microscope, and the measurement results were compared. As illustrated in FIG. 14, Example 1 of the present invention was able to acquire the image without abnormalities under all conditions, but in the case of Comparative Example 3, in order to acquire the same image as the present invention, a lens having at least 4x magnification should be used, and preferably a lens of 10 times should be used to acquire a normal image. That is, in the case of the present invention, it is possible to acquire a high-resolution image of a large area using a 1x lens, but in the case of the existing fluorescence microscope, since it has low resolution and low light amount, only a small-area image may be acquired, and therefore in the case of the present invention, the analysis of the large area may be performed in a short period of time.

### Experimental Example 3

The magnetic microrod manufactured in the present invention was manufactured as a glass-coated microwire according to the contents described in Korean Patent Application No. 10-2018-0130436. In addition, the diagnostic system using the manufactured magnetic microrod performing the sensitivity analysis on the image acquisition device of the present invention was configured to perform the diagnostic system through the following steps according to the contents described in Korean Patent Application No. 10-2020-0123989.
Step 1: Manufacturing and surface treatment of magnetic microrod
Step 2: Manufacturing of giant microrod magnetic conjugates with immobilized first antibody.
Step 3: QC of giant microrod with immobilized first antibody
Step 4: Preparation step of immunoreactive material
Step 5: Specimen drop step
Step 6: Mixing/heating step
Step 7: Washing step
Step 8: Detection signal measurement step

### [GFAP and UCHL1 assay]

Capture antibodies (GFAP_cAb_09 and UCHL1_cAb_02) conjugated with RSMP manufactured by the above method and detection Abs (GFAP_dAb_03 and UCHL1_dAb_07) conjugated with biotin were applied. Antigen GFAP from Hytest Co., and antigen UCHL1 from Origene Co., were added to PBS or serum at 0, 3.125, 6.25, 12.5, 25, 50, 100, 200, 400, 800, 1600, and 3200 pg/ml, and then the experiment was conducted using the same method as Experimental Example 1 described above.

In addition, the sensitivity comparison analysis was performed with GFAP from R&D System Co., and UCHL1 DuoSet ELISA assay products.

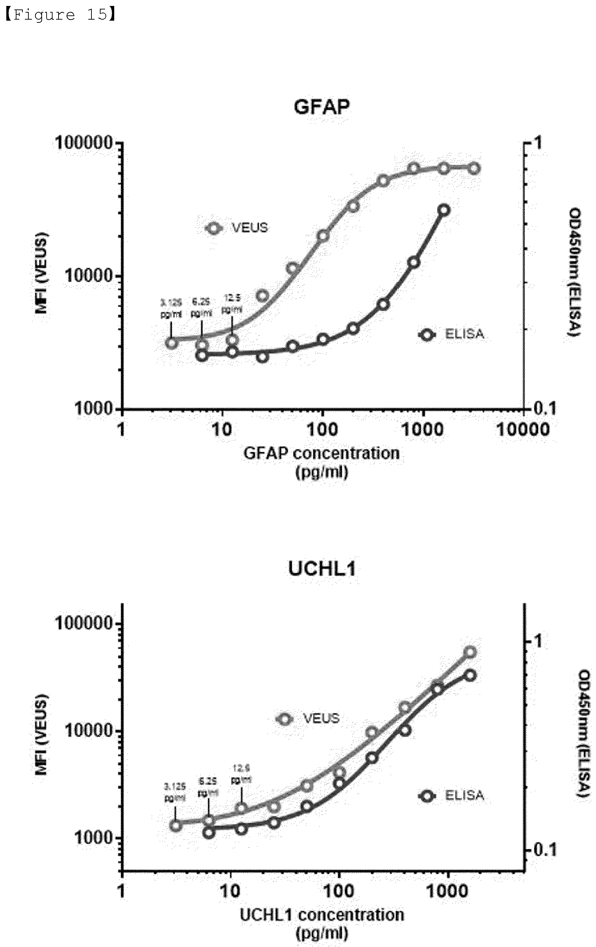

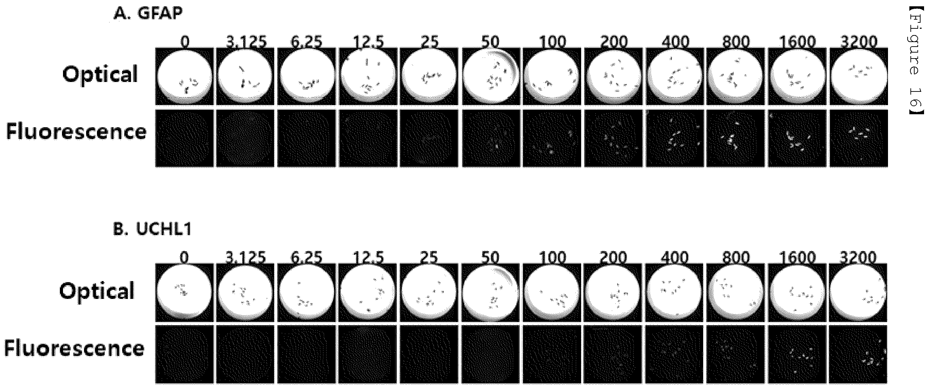

As a result of comparing and analyzing the results of testing at GFAP and UCHL1 concentrations of 0 to 3200 pg/ml by applying the image acquisition device of the present invention to the diagnostic system, it was confirmed that the sensitivity was 40 times higher than ELISA (see FIGS. 15 and 16).

### Experimental Example 4

An experiment was conducted to measure the sensitivity of the image acquisition device according to the present invention to fluorescence. The fluorescence images of the present invention and the existing fluorescence microscope were acquired, and then the respective fluorescence values (MFI) were compared. In this case, the experimental method was performed in the same way as Experimental Example 2 above.

**[Table 2]**

| | | Example 1 | Existing fluorescence microscope | | | |
|---|---|---|---|---|---|---|
| Lens magnification (times) | | 1x | 1x | 4x | 10x | 20x |
| Exposure time (ms) | 50 | 31520 | 3194 | 8119 | 12701 | 13052 |
| Exposure time (ms) | 200 | 65202 | 5833 | 15664 | 30708 | 32703 |
| Exposure time (ms) | 500 | 65513 | 8482 | 33736 | 52983 | 54115 |

As shown in Table 2 and FIG. 14, Example 1 of the present invention was found to have the sensitivity to the fluorescence that is approximately 10 times higher than that of the existing fluorescence microscope when a 1x lens is used. In order to have the sensitivity to the fluorescence similar to that of the present invention using the existing fluorescence microscope, it was confirmed that the magnification lens of 10x or higher should be used, and the exposure time of 4 times or longer is also required.

Special portions of contents of the present invention have been described in detail hereinabove, and it will be obvious to those skilled in the art that this detailed description is only an exemplary embodiment and the scope of the present invention is not limited by this detailed description. Therefore, the substantial scope of the present invention will be defined by the claims and equivalents thereof.

## Claims

1. An image acquisition device for detecting a target material signal, comprising:
(a) a camera for detecting a fluorescence signal;
(b) light sources that are disposed outside the camera at regular intervals in a circular shape;
(c) a shielding guide that is positioned above the light source and transmits only vertical direction light of light emitted from the light source; and
(d) a prism that refracts the light passing through the shielding guide toward a sample.

2. The image acquisition device of claim 1, wherein the shielding guide includes:
a central guide part that is formed in a center of the shielding guide and through which the fluorescence signal generated from the sample passes; and
an excitation light guide part that is installed on the outside of the central guide part at regular intervals and through which the excitation light generated from the light source passes.

3. The image acquisition device of claim 2, wherein a light-absorbing coating layer is formed inside the central guide part or the excitation light guide part.

4. The image acquisition device of claim 2, wherein when an internal diameter is R and a length from a point of contact with the excitation light to a top end is L, the excitation light guide part has R/L of 0.05 to 0.5.

5. The image acquisition device of claim 4, wherein the excitation light guide part has an internal diameter R of 2 to 5 mm and a length L of 10 to 50 mm.

6. The image acquisition device of claim 2, wherein the shielding guide includes 2 to 30 excitation light guide parts, and the light sources are independently installed in each of the excitation light guide parts.

7. The image acquisition device of claim 1, wherein an excitation light lens is formed above the light source to focus the excitation light generated from the light source.

8. The image acquisition device of claim 1, wherein the image acquisition device acquires a fluorescence image with a magnification of 0.5 to 2 times.

9. The image acquisition device of claim 1, wherein the prism is installed above the shielding guide to refract the excitation light passing through the shielding guide toward the sample.

10. The image acquisition device of claim 1, wherein the light source is a light emitting diode (LED) that emits excitation light with a wavelength of 400 to 700 nm.

11. The image acquisition device of claim 1, wherein the image acquisition device has a uniformity of 70% or more, as expressed by Equation 1 below. Uniformity = (min for fluorescence signal of pixel area/max for fluorescence signal of pixel area) × 100(%)

12. The image acquisition device of claim 1, wherein the sensitivity of the image acquisition device to fluorescence is 5 times higher than that of a conventional low-magnification fluorescence microscope.

13. An image acquisition device for detecting a target material signal, comprising:
(i) a camera for detecting a fluorescence signal and an optical signal;
(ii) a sample unit that is installed at a certain interval from the camera;
(iii) a fluorescence unit that supplies excitation light from the camera toward the sample unit; and
(iv) an optical section that is installed at a certain distance from the sample unit in an opposite direction to the camera and supplies visible light toward the camera,
wherein the fluorescence unit includes:
(1) light sources that are disposed outside the camera at regular intervals in a circular shape;
(2) a shielding guide that is positioned above the light source and transmits only vertical direction light of light emitted from the light source; and
(3) a prism that refracts the light passing through the shielding guide toward a sample.

14. The image acquisition device of claim 13, wherein the sample includes magnetic particles.

15. The image acquisition device of claim 14, wherein the magnetic particles are formed in a micro-rod shape or a spherical shape.

16. An image analysis method using an image acquisition device for detecting a target material signal, the image acquisition device including: (i) a camera for detecting a fluorescence signal and an optical signal, (ii) a sample unit that is installed at a certain interval from the camera, (iii) a fluorescence unit that supplies excitation light from the camera toward the sample unit, and (iv) an optical section that is installed at a certain distance from the sample unit in an opposite direction to the camera and supplies visible light toward the camera, the image analysis method comprising:
① injecting magnetic particles bound to a target material into each well of a multi-well plate;
② fixing the multi-well plate to a sample unit;
③ applying power to an upper optical unit to acquire an optical image; and
④ applying power to a lower fluorescence unit to acquire a fluorescence image.
